# EUROPÄISCHE PATENTSCHRIFT

(11) **EP 2 202 862 B1**
(45) Veröffentlichungstag und Bekanntmachung des Hinweises auf die Patenterteilung: **01.01.2020**
(21) Anmeldenummer: 09014851.1
(22) Anmeldetag: 30.11.2009
(51) Int. Cl.: H02J 3/18, F03D 7/02, F03D 9/25, H02J 3/38

(54) **Verfahren und Stromerzeugungsanlage zum Stabilisieren eines Stromverteilungsnetzes**
Method and electricity generation system for stabilising an electricity distribution network
Procédé et installation de production de courant pour stabiliser un réseau de distribution du courant

(30) Priorität: 18.12.2008 DE 102008062356
(43) Veröffentlichungstag der Anmeldung: 30.06.2010
(73) Patentinhaber: Senvion GmbH, 22297 Hamburg (DE)
(72) Erfinder: Fortmann, Jens, 13156 Berlin (DE)
(74) Vertreter: Glawe, Delfs, Moll

(56) Entgegenhaltungen:
- EP-A1- 1 892 412
- WO-A2-2008/061698
- TAPIA G ET AL: "A new simple and robust control strategy for wind farm reactive power regulation" PROCEEDINGS OF THE 2002 IEEE INTERNATIONAL CONFERENCE ON CONTROL APPLICATIONS. CCA 2002. GLASCOW, SCOTLAND, U.K. , SEPT. 18 - 20, 2002; [IEEE INTERNATIONAL CONFERENCE ON CONTROL APPLICATIONS], NEW YORK, NY : IEEE, US LNKD- DOI:10.1109/CCA.2002.103871, Bd. 2, 18. September 2002 (2002-09-18), Seiten 880-885, XP010606090 ISBN: 978-0-7803-7386-0

## Beschreibung

Die Erfindung betrifft ein Verfahren zum Stabilisieren eines Stromverteilungsnetzes nach der Klärung eines Netzfehlers. An das Stromverteilungsnetz ist eine Stromerzeugungsanlage, insbesondere eine Windenergieanlage, angeschlossen, die über einen Umrichter elektrische Energie in das Stromverteilungsnetz einspeist. Bei dem Verfahren wird ein Netzfehler des Stromverteilungsnetzes entdeckt. Die Erfindung betrifft ferner eine Stromerzeugungsanlage, die über einen Umrichter elektrische Energie in ein Stromverteilungsnetz ein-speist und die eine Steuereinheit umfasst.

Eine häufige Ursache eines Netzfehlers liegt darin, dass irgendwo in dem Stromverteilungsnetz ein Kurzschluss auftritt. Ein Kurzschluss führt unmittelbar zu einem lokalen Spannungseinbruch. Innerhalb von Bruchteilen von Sekunden breitet sich der Spannungseinbruch über große Entfernungen durch das Stromverteilungsnetz aus. Auf einen Netzfehler wird üblicherweise dadurch reagiert, dass das Teilstück, in dem der Kurzschluss aufgetreten ist, vom Rest des Stromverteilungsnetzes getrennt wird. Bevor das Teilstück mit dem Kurzschluss vom Rest des Stromverteilungsnetzes getrennt ist, haben die Stromerzeuger keine Chance, die Spannung zu stabilisieren. Wichtig ist vor allem, dass die Stromerzeuger sich in dieser Phase nicht vom Stromverteilungsnetz trennen.

Entscheidend für die weitere Stabilität des Stromverteilungsnetzes ist die Phase, kurz nachdem das Teilstück mit dem Kurzschluss vom Rest des Stromverteilungsnetzes getrennt wurde. Die Spannung im Stromverteilungsnetz steigt dann zwar schnell wieder an, jedoch nicht sofort bis zur Sollspannung, sondern zunächst auf einen Wert von beispielsweise 75% der Sollspannung. Während das Netz durch die niedrige Spannung ohnehin in einem kritischen Zustand ist, können Regelmechanismen dazu führen, dass die Stabilisierung weiter erschwert wird. Dies gilt beispielsweise, wenn die Stufenschalter auf Verbraucherseite das Übersetzungsverhältnis zum Hochspannungsnetz ändern, um den Verbrauchern wieder Sollspannung liefern zu können. Das veränderte Übersetzungsverhältnis bewirkt eine Erhöhung des Stroms im Hochspannungsnetz und damit ein weiteres Absinken der Spannung im Hochspannungsnetz. Das Schalten der Stufenschalter auf Verbraucherseite führt so zu einem selbstverstärkenden Effekt, der der vollständigen Wiederherstellung und Stabilisierung des Stromverteilungsnetzes entgegenwirkt. Dieser selbstverstärkende (destabilisierende) Effekt ist deswegen besonders problematisch, weil die für die Grundlast verantwortlichen Synchrongeneratoren in dieser Phase nur sehr begrenzt in der Lage sind, den für eine Stützung der Spannung erforderlichen Blindstrom bereitzustellen. Das Dokument EP 1 892 412 A1 offenbart ein Verfahren zum Betreiben von Windenergieanlagen, bei dem jedem Wert einer Wirkleistung ein durch eine minimale Blindleistung und eine maximale Blindleitung definiertes Blindleistungsintervall zugeordnet ist und die Ist-Blindleistung innerhalb dieses Intervalls steuerbar ist, wobei die Wirkleitung reduziert wird, wenn eine Soll-Blindleistung außerhalb des der aktuellen Wirkleistung zugeordneten Blindleistungsintervalls liegt. Das Dokument "Tapia, G. et al.: "A new simple and robust control strategy for wind farm reactive power regulation", Proceedings of the 2002 IEEE International Conference on Control Applications, Glasgow, Scotland, UK, Sept.18-20, 2002" offenbart ein Verfahren zur Blindleistungsregelung. Die beiden vorgenannten Dokumente befassen sich allerdings nicht mit Netzfehlern. Das Dokument WO 2008/061698 A2 betrifft eine Gegensystemregelung einer Windenergieanlage, bei dem eine phasenspezifische Aufteilung der Regelungsgrößen in ein Mitsystem und ein Gegensystem erfolgt, wobei die Regelung im Falle eines Netzfehlers eine Priorisierung zwischen einer Netzstabilisierung und einer Anlagenschonung ermöglicht.

Der Erfindung liegt die Aufgabe zu Grunde, ein Verfahren und eine Stromerzeugungsanlage vorzustellen, die verstärkt dazu beitragen, das Stromverteilungsnetz nach der Klärung eines Netzfehlers wieder zu stabilisieren. Ausgehend vom eingangs genannten Stand der Technik wird die Aufgabe durch die Merkmale der unabhängigen Ansprüche gelöst. Vorteilhafte Ausführungsformen finden sich in den Unteransprüchen.

Bei dem erfindungsgemäßen Verfahren wird nach der Entdeckung eines Netzfehlers ein Stabilisierungsregler in der Stromerzeugungsanlage aktiviert, dessen Sprungantwort mit der Zeit stetig ansteigt und der die Spannung der eingespeisten elektrischen Energie in Abhängigkeit von einem rückgeführten Spannungssignal regelt. Nach Ablauf einer vorgegebenen Zeitspanne ab dem Aktivieren des Stabilisierungsreglers wird überprüft, ob sich die Spannung stabilisiert hat. Hat sich die Spannung noch nicht ausreichend stabilisiert, wird die Blindstromeinspeisung über eine für den Normalbetrieb vorgesehene Grenze hinaus erhöht.

Zunächst werden einige Begriffe erläutert. Umrichtergespeiste Stromerzeugungsanlagen sind derzeit in erster Linie solche, bei denen die Energie aus so genannten erneuerbaren Energien gewonnen wird. Insbesondere kann die Stromerzeugungsanlage auf Windenergie, Sonnenenergie, Biomasse, thermischer Energie beruhen. Ein Einsatz von umrichergespeisten Stromerzeugungsanlagen erfolgt auch bei Pumpspeicherkraftwerken, bei denen eine variable Drehzahl der primären Energieerzeugung (in diesem Fall die Turbinen) gewünscht ist. Ein weiteres Einsatzgebiet sind Kraftwerke, die in Netze unerschiedlicher Frequenz einspeisen, wenn z.B. ein Teil der Energie in ein Bahnstromnetz, ein anderer Teil in das reguläre Stromnetz eigespeist werden soll. Von der Erfindung umfasst sind also Stromerzeugungsanlagen, die nur einen Teil der erzeugten elektrischen Energie in das Stromverteilungsnetz einspeisen. Durch den Umrichter wird es möglich, Spannung und Phase der in das Stromverteilungsnetz eingespeisten elektrischen Energie weitgehend unabhängig von der eigentlichen Stromerzeugung einzustellen.

Der Begriff Netzfehler bezieht sich auf einen starken Spannungseinbruch und nicht auf Schwankungen, die während des normalen Betriebs beispielsweise durch einen Stufenschalter auftreten. Von einem Netzfehler wird insbesondere dann gesprochen, wenn die Spannung um mehr als 10% von der Nennspannung abweicht, insbesondere wenn die Spannung in weniger als 1 ms um mehr als 10% einbricht.

Auch wenn der Kurzschluss weit von der Stromerzeugungsanlage entfernt ist, wird der Netzfehler regelmäßig durch einen Spannungseinbruch bei der Stromerzeugungsanlage entdeckt. Der durch den Kurzschluss verursachte Spannungseinbruch breitet sich nämlich innerhalb von Bruchteilen von Sekunden über große Entfernungen durch das Stromverteilungsnetz aus. Die Entdeckung eines lokalen Spannungseinbruchs ist deswegen regelmäßig die schnellste Möglichkeit für die Stromerzeugungsanlage, Kenntnis von einem Kurzschluss zu erhalten. Von der Erfindung umfasst ist auch die Möglichkeit, dass die Nachricht über den Kurzschluss auf andere Weise zu der Stromerzeugungsanlage gelangt.

Nach der Entdeckung eines Netzfehlers wird ein Stabilisierungsregler in der Stromerzeugungsanlage aktiviert. Der Stabilisierungsregler, der während des normalen Betriebs nicht aktiviert ist, ist Bestandteil eines geschlossenen Regelkreises. Ein Signal über die Spannung der eingespeisten elektrischen Energie wird zurückgeführt und mit einer Sollspannung als Führungsgröße verglichen. Die Differenz zwischen den beiden Werten wird dem Stabilisierungsregler als Eingangsgröße zugeführt. Mit der Ausgangsgröße des Stabilisierungsreglers wird über den Umrichter Einfluss auf die Spannung genommen. Als Sprungantwort wird das Ausgangssignal des Stabilisierungsreglers bezeichnet, wenn die Eingangsgröße von null auf einen konstanten Wert springt. Bei einem Stabilisierungsregler, dessen Sprungantwort mit der Zeit ansteigt, wächst also die Ausgangsgröße mit der Zeit, wenn die Eingangsgröße konstant bleibt.

Dem erfindungsgemäßen Verfahren liegt eine Mehrzahl von Erkenntnissen zu Grunde. Erstens ist das Stromverteilungsnetz nach dem Netzfehler in einem kritischen Zustand und es entscheidet sich innerhalb von kurzer Zeit, ob es zu einem Totalausfall kommt oder ob die Stabilisierung gelingt. Zweitens hat der kritische Zustand zur Folge, dass die Wahrscheinlichkeit einer oszillatorischen Instabilität, also von Schwingungen in der Frequenz des Netzes steigt. Drittens muss die Entscheidung über die Reaktion der Stromerzeugungsanlage auf einer sehr unvollständigen Informationsgrundlage fallen. Die Stromerzeugungsanlage merkt, dass die Spannung einbricht, andere Informationen hat sie nicht oder nicht ausreichend zuverlässig zur Verfügung.

Das erfindungsgemäße Verfahren schlägt angesichts dessen einen zweistufigen Ablauf vor. In einem ersten Schritt wird nach der Entdeckung des Netzfehlers der Stabilisierungsregler aktiviert. Zwar ist die Abweichung zwischen Istwert und Sollwert der Spannung zu diesem Zeitpunkt häufig groß, trotzdem soll der Stabilisierungsregler keine sprunghafte Änderung herbeiführen. Sprunghafte Änderungen erhöhen nämlich das Risiko von oszillatorischen Instabilitäten. Hält die Abweichung zwischen dem Istwert und dem Sollwert für eine Zeitspanne an, so ist dies ein Zeichen, dass die sofortige Stabilisierung des Stromverteilungsnetzes nicht gelungen ist. Die Stromerzeugungsanlage soll dann zur Stützung der Spannung soviel Blindstrom wie möglich einspeisen. Erreicht wird dies erfindungsgemäß dadurch, dass ein Stabilisierungsregler mit einer ansteigenden Sprungantwort verwendet wird. Dieser vermeidet sprunghafte Änderungen zu Beginn, hat aber eine große Wirkung bei einer anhaltenden Abweichung zwischen Istwert und Sollwert.

Nachdem der Stabilisierungsregler für eine Zeitspanne aktiv war, wird überprüft, ob diese Maßnahme zu einer Stabilisierung der Spannung geführt hat. Ist dies nicht der Fall, wird die zweite Stufe des Verfahrens eingeleitet. Während in der ersten Stufe noch alle Vorgaben des regulären Betriebs eingehalten werden, also beispielsweise Überspannungen vermieden werden und die Einspeisung von Wirkleistung aufrechterhalten wird, wird in der zweiten Stufe eine für den Normalbetrieb vorgesehene Grenze aufgehoben, um die Blindstromeinspeisung erhöhen zu können. Dies hat den Hintergrund, dass von einer kritischen Situation und einem schwerwiegendem Fehler ausgegangen werden muss, wenn eine ausreichende Stabilisierung des Stromverteilungsnetzes bis zu diesem Zeitpunkt noch nicht gelungen ist. Die Erfindung stellt also ein Verfahren vor, dass trotz instabilen Netzzustands und unsicherer Informationsbasis abgewogen auf den Netzfehler reagiert. Das erfindungsgemäße Verfahren trägt dadurch mit großer Aussicht auf Erfolg zu einer Stabilisierung des Netzes bei.

Auf der zweiten Stufe des Verfahrens besteht eine erste Option darin, die Blindstromeinspeisung dadurch über eine für den Normalbetrieb vorgesehene Grenze hinaus zu erhöhen, dass der Sollwert für die Spannung erhöht wird. Dadurch wird erreicht, dass der Anteil an Blindstrom erhöht werden kann, ohne den Wirkstrom zu vermindern. Die Begriffe Wirkstrom und Blindstrom werden als Synonym für Wirkanteil und Blindanteil der erzeugten Leistung verwendet; dem Fachmann ist bekannt, dass es andere Darstellungsmöglichkeiten wie den Phasenwinkel ϕ zwischen Strom und Spannung oder den Kosinus dieses Winkels gibt. Zwar gerät die Stromerzeugungsanlage durch die Erhöhung des Sollwerts für die Spannung in einen Zustand der Überlastung, für eine begrenzte Zeitspanne kann dies aber hingenommen werden.

Eine zweite Option für die zweite Stufe des erfindungsgemäßen Verfahrens besteht darin, die Blindstromeinspeisung dadurch über eine für den Normalbetrieb vorgesehene Grenze hinaus zu erhöhen, dass der Einspeisung von Blindstrom gegenüber der Einspeisung von Wirkstrom Priorität eingeräumt wird. In der ersten Stufe des erfindungsgemäßen Verfahrens hat genau wie im Normalbetrieb die Einspeisung von Wirkleistung Priorität, es wird nur soviel Blindstrom eingespeist, wie es zusätzlich zum Wirkstrom möglich ist. Die Priorität für den Wirkstrom in dieser Phase ist sinnvoll, weil die Verbraucher nach dem Einbruch viel Wirkleistung fordern. Reicht aber die erste Stufe des erfindungsgemäßen Verfahrens nicht aus, um das Netz ausreichend zu stabilisieren, sind weitere Maßnahmen erforderlich. Mit der Erfindung wird vorgeschlagen, nun der Einspeisung von Blindstrom anstatt der Einspeisung von Wirkstrom Priorität zu geben. Zwar scheint es auf ersten Blick widersinnig zu sein, nach einem Netzfehler die Einspeisung von Wirkstrom zu vermindern. Die Erfindung hat aber erkannt, dass ein Stützen der Spannung der gewichtigere Beitrag zum Stabilisieren des Netzes ist. Die Spannung ist nämlich in einem Stromverteilungsnetz ein eher lokales Phänomen ist. Die durch das Einspeisen von Wirkstrom beeinflusste Frequenz hingegen ist ein globales Phänomen. Fällt also lokal Wirkstrom weg, so kann dies in vielen Fällen von einem weit entfernten Kraftwerk aufgefangen werden. Bricht aber lokal die Spannung ein, so kann ein weit entferntes Kraftwerk dies nicht ausgleichen.

In der ersten Stufe des erfindungsgemäßen Verfahrens wird die Priorität des Wirkstroms dadurch sichergestellt, dass eine obere Grenze für den Phasenwinkel ϕ zwischen Strom und Spannung gesetzt wird. Die Grenze kann entweder eine ausdrücklich vorgegebene Grenze für den Phasenwinkel ϕ sein oder eine physikalische Grenze, die wie eine Grenze für den Phasenwinkel ϕ wirkt. Wird beispielsweise bei einem bestimmten Phasenwinkel ϕ der maximal zulässige Strom in der Stromerzeugungsanlage erreicht, so wirkt diese Begrenzung des Stroms wie eine Begrenzung des Phasenwinkels ϕ. Der Stabilisierungsregler kann bis an die Grenze heranregeln, aber nicht darüber hinaus. Die Grenze ist so gewählt, dass die Stromerzeugungsanlage die Summe aus Wirkstrom und Blindstrom verkraften kann. Um in der zweiten Stufe des erfindungsgemäßen Verfahrens eine Überlastung der Stromerzeugungsanlage durch die Aufhebung der Grenze für den Phasenwinkel ϕ zu vermeiden, muss sichergestellt sein, dass der Wirkstrom parallel vermindert wird, wenn die Grenze überschritten wird und die Blindstromeinspeisung erhöht wird. Die Einspeisung von Blindstrom wird also auf Kosten der Wirkstromeinspeisung erhöht.

Die in der zweiten Stufe des erfindungsgemäßen Verfahrens vorgesehene Erhöhung der Blindstromeinspeisung über die für den Normalbetrieb vorgesehene Grenze für den Phasenwinkel ϕ hinaus, kann unter der Kontrolle des Stabilisierungsreglers erfolgen. Möglich ist es auch, den Stabilisierungsregler auf der zweiten Stufe des Verfahrens wieder zu deaktivieren und die Blindstromeinspeisung mit anderen Mitteln zu erhöhen.

Die Grenze für den Phasenwinkel ϕ kann in der zweiten Stufe des Verfahrens vollständig aufgehoben werden. Der Phasenwinkel ϕ könnte dann bis auf 90° ansteigen, so dass ausschließlich Blindstrom eingespeist wird. Zweckmäßiger ist es in vielen Fällen, eine obere Grenze für den Phasenwinkel ϕ und damit eine untere Grenze für den Wirkanteil festzulegen. Ist die Stromerzeugungsanlage eine Windenergieanlage, so kann die untere Grenze in Abhängigkeit von der Windgeschwindigkeit festgelegt werden. Zweckmäßig kann es zudem sein, den Phasenwinkel ϕ wieder auf den ursprünglichen Wert zurückzusetzen, sobald eine vorgegebene Zeitspanne abgelaufen ist oder eine vorgegebene Grenze für die Spannung überschritten wurde.

In einer vorteilhaften Ausführungsform ist das erfindungsgemäße Verfahren auf drei Stufen erweitert. Wenn die Spannung sich durch die erste Stufe des erfindungsgemäßen Verfahrens nicht innerhalb einer ersten vorgegebenen Zeitspanne ausreichend stabilisiert hat, wird in einer zweiten Stufe zunächst der Sollwert für die Spannung erhöht. Wie oben dargelegt gerät die Stromerzeugungsanlage dadurch in einen Zustand der Überlast, so dass dies nicht dauerhaft aufrechterhalten werden kann. Nach Ablauf einer zweiten vorgegebenen Zeitspanne seit dem Erhöhen des Sollwerts wird deswegen erneut geprüft, ob sich die Spannung hinreichend stabilisiert hat. Ist dies nicht der Fall, wird in einer dritten Stufe des erfindungsgemäßen Verfahrens eine Obergrenze für den Phasenwinkel ϕ zwischen Strom und Spannung aufgehoben. Dies hat zur Folge, dass die Blindstromeinspeisung auf Kosten der Wirkstromeinspeisung erhöht werden kann. Die Stromerzeugungsanlage leistet in diesem Zustand ihren größtmöglichen Beitrag, um lokal die Spannung zu stützen.

Für den Normalbetrieb hätte der Stabilisierungsregler Folgen, die unerwünscht sind. Das erfindungsgemäße Verfahren sieht deswegen vor, den Stabilisierungsregler rechtzeitig wieder abzuschalten. Eine Bedingung für das Deaktivieren des Stabilisierungsreglers kann es sein, dass der Istwert der Spannung eine vorgegebene Schwelle überschreitet. Anderenfalls besteht die Gefahr, dass eine nach Fehlerklärung sprunghaft angestiegene und deswegen schon zu hohe Spannung durch den Stabilisierungsregler weiter erhöht wird. Alternativ oder zusätzlich kann der Stabilisierungsregler auch deaktiviert werden, wenn eine vorgegebene Zeitspanne seit Eintritt des Netzfehlers vergangen ist oder wenn die Spannung für eine vorgegebene Zeitspanne innerhalb eines vorgegebenen Bandes gehalten werden konnte.

Die Stromerzeugungsanlage erzeugt elektrische Energie in der Regel mit Niederspannung oder Mittelspannung. Auch die mit Niederspannung erzeugte elektrische Energie wird regelmäßig zunächst auf Mittelspannung transformiert, bevor für den Transport über weite Strecken eine Transformation auf Hochspannung erfolgt. Bei einer Erzeugung mit Niederspannung wird wird die Niederspannung durch den Regelkreis unmittelbar beeinflusst, während der Einfluss auf die Mittelspannung und Hochspannung indirekt ist. Bei einer Erzeugung mit Mittelspannung wird durch den Regelkreis die Mittelspannung unmittelbar beeinflusst, während der Einfluss auf die Hochspannung indirekt ist. Als Führungsgröße für den Regelkreis kommt außer der Niederspannung und der Mittelspannung auch die Hochspannung in Betracht. Wird die Hochspannung als Führungsgröße gewählt, so hat dies den Vorteil, dass der Regelung direkt die Größe zu Grunde liegt, auf die es am Ende ankommt. Wegen des Stufenschalters ist das Verhältnis zwischen der Mittelspannung und der Hochspannung in der Regel nicht fest. Dient die Hochspannung als Führungsgröße, so sollte sie auf einen Wert vor Eintritt des Netzfehlers geregelt werden und nicht auf einen allgemein festgelegten Wert. Dieser Wert kann insbesondere die Untergrenze des Spannungsbands vor Eintritt des Netzfehlers sein. Wenn die Daten vom Mittelspannungsnetz und die Eigenschaften des Transformators zwischen dem Mittelspannungsnetz und dem Hochspannungsnetz bekannt sind, sind die Stromerzeugungsanlagen in der Lage, die Hochspannung zu berechnen. Wenn eine schnelle Kommunikationsverbindung eingerichtet ist, kann alternativ die Hochspannung gemessen werden und können die Messwerte zu den Stromerzeugungsanlagen übertragen werden.

Die Spannung im Stromverteilungsnetz ist wie oben erwähnt ein eher lokales Phänomen. Wenn eine Mehrzahl von Stromerzeugungsanlagen gleichzeitig Maßnahmen trifft, um die Spannung zu stützen, so kann dies dazu führen, dass die Spannung lokal kurzfristig über den Sollwert hinaus ansteigt, obwohl das Netz insgesamt noch gar nicht wieder stabilisiert ist. Der Stabilisierungsregler beginnt angesichts der über dem Sollwert liegenden Ist-Spannung, die Spannung wieder abzusenken. Dieser unerwünschte Effekt kann vermieden werden, indem der Stabilisierungsregler so gestaltet wird, dass er ausschließlich spannungsanhebend wird.

Wie oben erwähnt besteht nach einem Netzfehler angesichts des unklaren Zustands des Stromverteilungsnetzes ein erhöhtes Risiko von oszillatorischen Schwankungen. Allgemein ist es deswegen erstrebenswert, dass an das Netz angeschlossene Komponenten sprunghafte Änderungen vermeiden. Im Rahmen der Erfindung hat dieser Gedanke einen ersten Niederschlag darin gefunden, dass ein Stabilisierungsregler gewählt wurde, der sprunghafte Änderungen zu Beginn des erfindungsgemäßen Verfahrens vermeidet. Für die übrigen Änderungen, denen die Stromerzeugungsanlage während des erfindungsgemäßen Verfahrens unterzogen wird, gilt dasselbe. Diese sollten nicht sprunghaft erfolgen, sondern kontinuierlich, über einen Zeitraum gestreckt, in mehreren Stufen oder über eine Rampe. Dies gilt insbesondere für den Sollwert der Spannung, wenn er am Ende des erfindungsgemäßen Verfahrens wieder auf den normalen Wert abgesenkt wird, und für den Stabilisierungsregler, der am Ende des Verfahrens ebenfalls nicht auf einen Schlag deaktiviert werden sollte. Die gilt auch für die Reduktion des Wirkstroms, wenn die Grenze für den Phasenwinkel ϕ aufgehoben wurde, und den anschließenden Wiederanstieg des Wirkstroms. Ist die Stromerzeugungsanlage eine Windenergieanlage, so kann es bei einer Reduktion der Wirkleistung zusätzlich sinnvoll sein, den Anstellwinkel der Rotorblätter anzupassen, um eine Beschleunigung des Rotors zu vermeiden. Auch die Reduktion der Blindleistung sollte so langsam erfolgen, dass die Änderungen durch andere Teilnehmer im Netz ausgeglichen werden kann. Allgemein können die Änderungen beispielsweise über einen Zeitraum von mindestens 2 s, vorzugsweise mindestens 5 s, weiter vorzugsweise mindestens 10 s gestreckt werden.

Die Erfindung betrifft ferner eine Stromerzeugungsanlage, die dazu ausgelegt ist, das erfindungsgemäße Verfahren durchzuführen. Ausgehend vom eingangs genannten Stand der Technik zeichnet sich die Stromerzeugungsanlage erfindungsgemäß dadurch aus, dass ein Stabilisierungsregler vorgesehen ist, dessen Sprungantwort mit der Zeit ansteigt und der dazu ausgelegt ist, die Spannung der eingespeisten elektrischen Energie in Abhängigkeit von einem rückgeführten Spannungssignal zu regeln. Ferner umfasst die Steuereinheit ein Aktivierungsmodul, das den Stabilisierungsregler nach einem Netzfehler aktiviert sowie einen Detektor zum Überprüfen, ob sich die Spannung nach Ablauf einer vorgegebenen Zeitspanne seit dem Aktivieren des Stabilisierungsreglers stabilisiert hat. Schließlich ist ein Stellglied vorgesehen, das die Einspeisung von Blindstrom über eine für den Normalbetrieb vorgesehene Grenze hinaus erhöht, falls die Überprüfung durch den Detektor ergibt, dass die Spannung noch nicht ausreichend stabilisiert ist. Zweckmäßigerweise sind die Elemente der Steuereinheit baulich miteinander verbunden. Die Elemente können auch voneinander getrennt sein.

Das geläufigste Beispiel für einen Regler mit ansteigender Sprungantwort ist ein so genannter I-Regler, bei dem der Regelung ein Integrierglied zugrunde liegt. Das Integrierglied reagiert auf einen konstanten Sprung mit einer unbegrenzt ansteigenden Ausgangsgröße. Eine ähnliche Wirkung kann beispielsweise erzielt werden mit einem P-Regler, dessen Verstärkung mit der Zeit ansteigt. Der P-Regler antwortet mit einem Sprung auf einen konstanten Sprung. Bei einem Regler mit ansteigender Sprungantwort wächst die Ausgangsgröße immer weiter, wenn die Abweichung zwischen Sollwert und Istwert anhält. In der Praxis muss deswegen eine Größe, die durch einen Regler mit ansteigender Sprungantwort eingestellt wird, immer begrenzt sein. Bei der erfindungsgemäßen Stromerzeugungsanlage kann diese Grenze beispielsweise durch einen Wert für den Phasenwinkel ϕ zwischen Strom und Spannung gesetzt sein, der nicht überschritten werden darf. Der erfindungsgemäße Stabilisierungsregler ist nur im Anschluss an einen Netzfehler aktiv. Im Normalbetrieb unterliegt die Spannung normalerweise nicht einem geschlossenen Regelkreis. Ist im Einzelfall auch im Normalbetrieb ein geschlossener Regelkreis für die Spannung vorgesehen, so ist der Regler ein einfacher P-Regler. Nach einem Netzfehler kann der erfindungsgemäße Stabilisierungsregler entweder zusätzlich zu oder anstatt dem Regler für den Normalbetrieb vorgesehen sein. Kommt es nach dem Aktivieren des Stabilisierungsreglers zu unerwünschten Oszillationen im Netz, kann der Anteil des Stabilisierungreglers relativ zu dem Anteil des Reglers für den Normalbetrieb vermindert werden, um die Schwingung zu dämpfen. Ebenfalls möglich ist es, den Stabilisierungsregler kurzfristig zurückzusetzen und auf den Regler für den Normalbetrieb überzugehen, wenn die Spannung über eine gewisse Grenze angestiegen ist. Dadurch können Überspannungen vermieden werden. Stellt sich heraus, dass die Spannung noch nicht ausreichend stabilisiert ist, kann der Stabilisierungsregler wieder aktiviert werden.

Die Erfindung wird nachfolgend unter Bezugnahme auf die beigefügten Zeichnungen anhand einer vorteilhaften Ausführungsform beispielhaft beschrieben. Es zeigen:
- Fig. 1:: ein Stromverteilungsnetz mit einer erfindungsgemäßen Stromerzeugungsanlage;
- Fig. 2:: eine Vorgabe an einen Generator für das Verhalten nach einem Netzfehler;
- Fig. 3:: eine schematische Darstellung einer erfindungsgemäßen Stromerzeugungsanlage;
- Fig. 4:: eine schematische Darstellung eines Regelkreises mit einem erfindungsgemäßen Stabilisierungsregler; und
- Figuren 5 bis 7:: verschiedene Ausführungsformen des erfindungsgemäßen Verfahrens.

An ein insgesamt mit dem Bzz. 10 gekennzeichnetes Stromverteilungsnetz ist ein konventionelles Kraftwerke 11 angeschlossen, in dem mithilfe eines Synchrongenerators SG elektrische Energie erzeugt wird. Eine erfindungsgemäße Stromerzeugungsanlage 14, die hier eine Windenergieanlage ist, ist ebenfalls mit dem Stromverteilungsnetz 10 verbunden und speist über einen Umrichter elektrische Energie in das Stromverteilungsnetz 10 ein. Das Stromverteilungsnetz 10 überträgt die elektrische Energie unter Hochspannung zu Verbrauchern 12.

Zwischen zwei Schaltstellen 15, 16 verzweigt sich das Stromverteilungsnetz 10 in einen ersten Zweig 17 und einen zweiten Zweig 18. Eine solche ringförmige Gestaltung eines Stromverteilungsnetzes ist üblich; durch sie wird sichergestellt, dass zwei Schaltstellen nicht durch den Ausfall einer Verbindungsleitung vollständig voneinander getrennt werden. Angenommen es tritt in dem ersten Zweig 17 bei 13 ein Kurzschluss auf, so führt dies dazu, dass in dem gesamten Stromverteilungsnetz 10 die Spannung zusammenbricht. Der Spannungseinbruch breitet sich innerhalb von Bruchteilen von Sekunden vom Ort des Erdschlusses 13 bis zu dem konventionellen Kraftwerk 11 und der Windenergieanlage 14 aus.

Die Schaltstellen 15, 16 sind so ausgelegt, dass sie innerhalb von 150 ms feststellen, ob der Erdschluss im ersten Zweig 17 oder im zweiten Zweig 18 aufgetreten ist, und den Fehler klären, indem sie den betreffenden Zweig vom Rest des Stromverteilungsnetzes 10 trennen. Nachdem die Spannung während des Erdschlusses auf einen Wert von beispielsweise 15% der Sollspannung eingebrochen war, steigt sie im Anschluss an die Fehlerklärung sehr schnell wieder an. Es wird allerdings nicht sofort wieder die Sollspannung erreicht, sondern ein Wert von beispielsweise 80% der Sollspannung. Während des Erdschlusses ist es vor allem wichtig, dass das konventionelle Kraftwerk 11 und die Windenergieanlage 14 sich nicht vom Stromverteilungsnetz trennen. Viel zur Stützung der Spannung können sie nicht beitragen, solange der Erdschluss vorliegt. In der Phase, die sich unmittelbar an die Fehlerklärung anschließt, entscheidet sich, ob es zu einem Totalausfall kommt oder ob eine Stabilisierung des Netzes gelingt.

Nicht ganz einfach ist die Stabilisierung des Stromverteilungsnetzes 10 in dieser Phase, weil eine verminderte Spannung im Hochspannungsnetz dazu führt, dass auch bei den Verbrauchern die Spannung sinkt. In den Transformatoren, in denen die elektrische Energie vom Hochspannungsnetz für die Verbraucher herunter transformiert wird, sind die Stufenschalter so eingerichtet, dass sie das Übersetzungsverhältnis zur Hochspannung ändern, wenn bei den Verbrauchern eine zu geringe Spannung ankommt. Das Hochspannungsnetz wird dadurch weiter belastet, es kann zu einem selbstverstärkenden Effekt kommen, der das Stromverteilungsnetz destabilisiert.

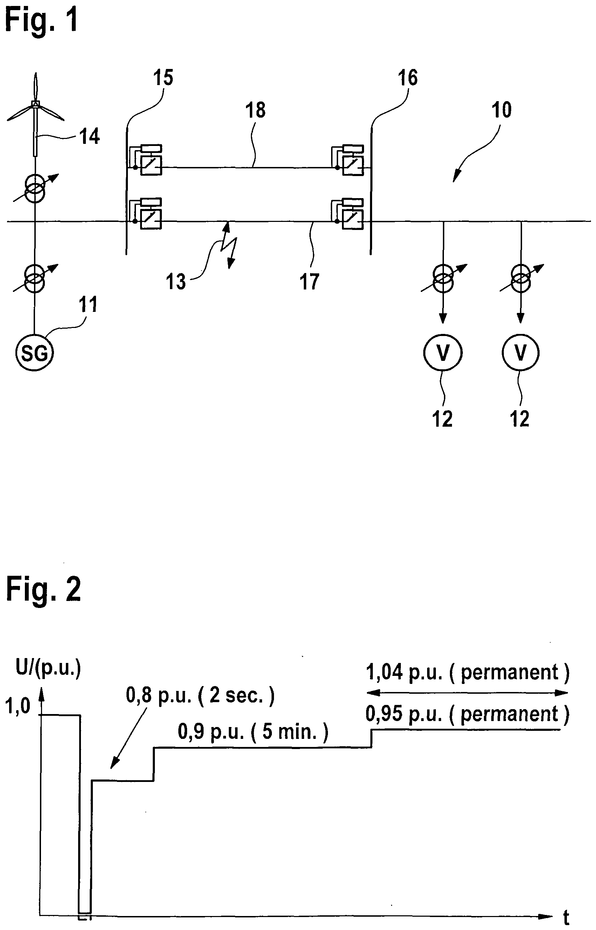

In Fig. 2 sind beispielhaft die Anforderungen dargestellt, die die Betreiber von Stromverteilungsnetzen an die einspeisenden Generatoren für das Verhalten während und nach einem Netzfehler stellen. Der Abbildung kann entnommen werden, welchen zeitlichen Verlauf die auf der y-Achse in relativen Einheiten (p.u.) aufgetragene Spannung während eines typischen Netzfehlers haben kann. Von der Sollspannung (1,0 p.u.) bricht die Spannung nach dem Auftreten eines Erdschlusses auf einen Bruchteil des Sollwerts ein. Nach Fehlerklärung kann die Spannung für 2 Sekunden bei 80% der Sollspannung (0,8 p.u.) liegen, anschließend für 5 Minuten bei 90% der Sollspannung (0,9 p.u.) und danach bei 95% der Sollspannung (0,95 p.u.). Die Anforderung der Netzbetreiber an die Stromerzeuger ist es, dass die einspeisenden Generatoren nur dann vom Netz getrennt werden dürfen, wenn die Spannung unterhalb des in Fig. 2 gezeigten Verlaufs ist. Die einspeisenden Generatoren dürfen sich also vom Netz trennen, wenn die Spannung nach Fehlerklärung für mehr als 2 Sekunden unterhalb von 90% der Sollspannung bleibt. Zwischen 95% und 104% der Sollspannung muss die Stromerzeugungsanlage permanent am Netz bleiben.

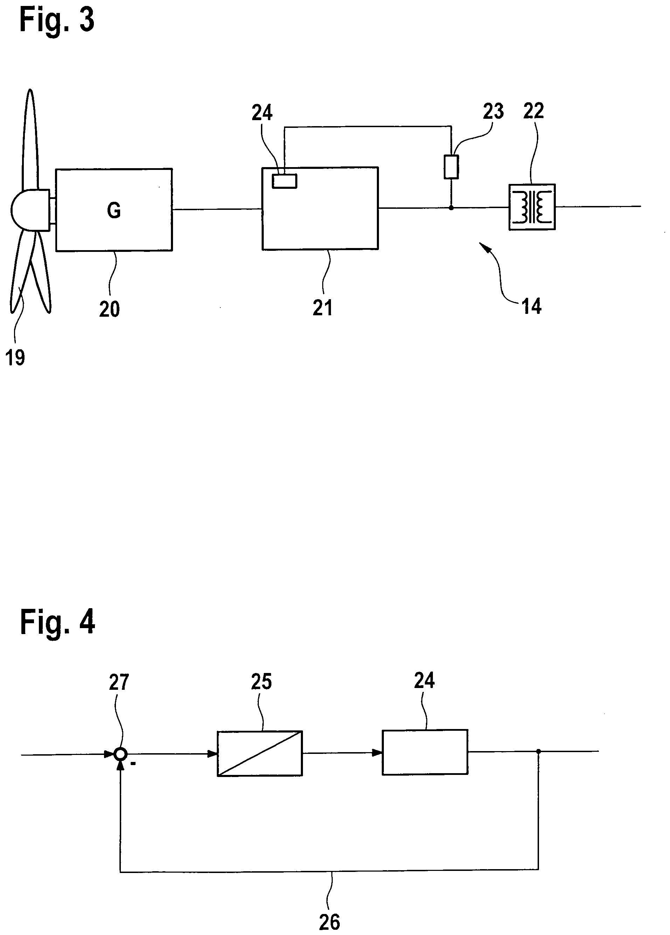

Fig. 3 zeigt schematisch den Aufbau einer erfindungsgemäßen Windenergieanlage 14. Die mit einem Rotor 19 gewonnene kinetische Energie wird über einen Generator 20 in elektrische Energie umgewandelt. Über einen Umrichter 21 wird die elektrische Energie an einen Transformator 22 übermittelt. In dem Transformator 22 wird die elektrische Energie für den Weitertransport zunächst von Niederspannung auf Mittelspannung transformiert. Kommt es zu einem Spannungseinbruch im in Fig. 3 nicht dargestellten Hochspannungsnetz, so sinkt auch die Spannung im Mittelspannungsnetz, was über den Transformator 22 auf Niederspannungsseite übertragen wird. In der Windenergieanlage 14 ist ein Sensor 23 vorgesehen, der die Spannung am Ausgang des Umrichters 21 misst und ein entsprechendes Spannungssignal an eine Umrichtersteuerung 24 übermittelt. Wird ein Netzfehler festgestellt, also ein Spannungseinbruch um mehr als 10% in weniger als 1 ms, so wird das erfindungsgemäße Verfahren ausgelöst.

Auf der ersten Stufe des erfindungsgemäßen Verfahrens wird ein in Fig. 4 gezeigter Stabilisierungsregler 25 aktiviert. Der Stabilisierungsregler 25 ist Bestandteil eines geschlossenen Regelkreises, bei dem wie bei 26 angedeutet ein Signal über die Spannung der eingespeisten elektrischen Energie zurückgeführt wird. Hier wird ein Signal über die Niederspannung am Ausgang des Umrichters 21 zurückgeführt, von der Erfindung umfasst ist auch die Rückführung eines Signals über die Mittelspannung oder die Hochspannung. Das rückgeführte Spannungssignal wird bei 27 mit der Sollspannung als Führungsgröße verglichen und die Differenz wird dem Stabilisierungsregler 25 als Eingangsgröße zugeführt. Der Stabilisierungsregler 25 ist ein I-Regler, dessen Sprungantwort mit der Zeit ansteigt, dessen Ausgangsgröße also wächst, wenn die Differenz zwischen dem rückgeführten Spannungssignal und der Führungsgröße für eine Zeitspanne anhält. Die Ausgangsgröße wächst auch dann, wenn die Differenz selbst als Eingangsgröße nicht wächst. Die Sprungantwort des Stabilisierungsreglers 25 ist in dem Schaltzeichen in Fig. 4 angedeutet. Die Ausgangsgröße des Stabilisierungsreglers 25 wird der Umrichtersteuerung 24 zugeführt, die abhängig von der Ausgangsgröße Einfluss auf die Spannung nimmt und insbesondere den Blindanteil erhöht, um die Spannung zu stützen.

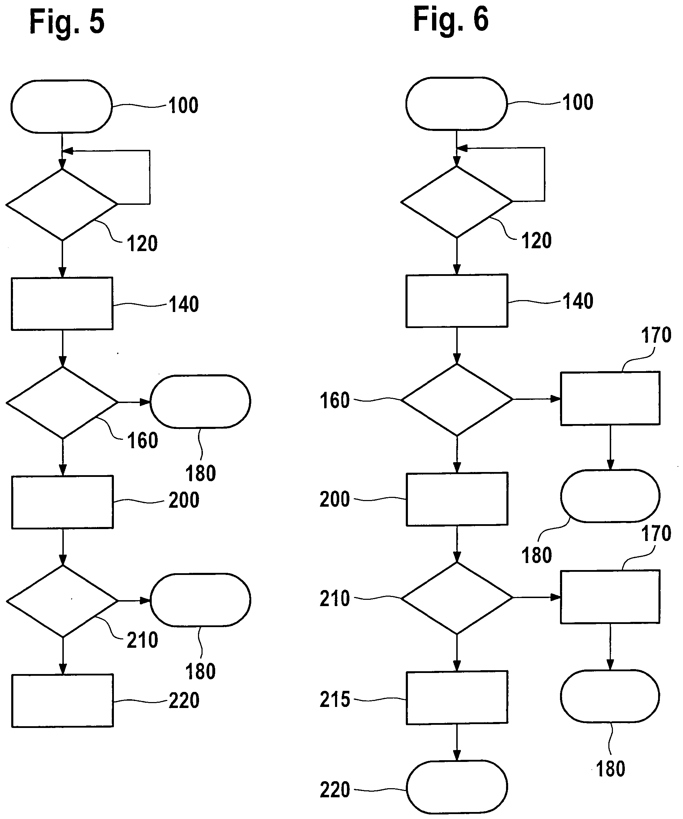

Der Verlauf des erfindungsgemäßen Verfahrens insgesamt ist in Fig. 5 schematisch dargestellt. Nachdem die Windenergieanlage bei 100 in Gang gesetzt wurde, wird bei 120 ständig überprüft, ob ein Netzfehler vorliegt. Wird ein Netzfehler festgestellt, wird bei 140 der Stabilisierungsregler 25 aktiviert. Während der Stabilisierungsregler 25 aktiv ist, wird bei 160 laufend überprüft, ob sich die Spannung wieder ausreichend stabilisiert hat. Von einer ausreichend stabilisierten Spannung wird ausgegangen, wenn die Spannung für eine Zeitspanne von mehr als 5 Sekunden höher als 95% der Sollspannung ist. Ein anderes Kriterium für eine ausreichend stabilisierte Spannung könnte es sein, dass die Spannung für mindestens 5 Sekunden höher ist als die Untergrenze des Spannungsbands im Hochspannungsnetz. Bei Messung der Hochspannung oder Kenntnis der Mittelspannung und der Stufung des Stufentransformators kann diese Spannung auch berechnet werden, sofern eine Strommessung vorliegt.

Hat sich die Spannung stabilisiert, wird das erfindungsgemäße Verfahren bei 180 beendet und die Windenergieanlage 14 wird wieder in den normalen Betriebszustands überführt. Tritt innerhalb von 2 bis 10 Sekunden seit dem Aktivieren des Stabilisierungsreglers 25 keine ausreichende Stabilisierung der Spannung ein, so wird bei 200 die zweite Stufe des erfindungsgemäßen Verfahrens aktiviert. In der zweiten Stufe wird die Sollspannung bei diesem Ausführungsbeispiel um 5 % gegenüber dem bisherigen Sollwert, z.B von 100% auf 105% erhöht. Die Windenergieanlage 14 kann dadurch zusätzlichen Blindstrom einspeisen, ohne dass der Wirkstrom vermindert werden muss. Der Stabilisierungsregler 25 ist weiter aktiv und regelt die Spannung nun auf den neuen Sollwert. Bei 210 wird wiederum überprüft, ob die zweite Stufe des erfindungsgemäßen Verfahrens zu einer ausreichenden Stabilisierung der Spannung führt. Ist dies der Fall, wird das erfindungsgemäße Verfahren bei 180 beendet und die Windenergieanlage 14 in den normalen Betriebszustands überführt. Der durch die Erhöhung der Sollspannung erhöhten Belastung kann die Windenergieanlage 14 nur für einen Zeitraum von 2 Minuten standhalten. Nach Ablauf der 2 Minuten wird das erfindungsgemäße Verfahren bei 220 auch dann beendet, wenn die Spannung noch nicht stabilisiert ist.

Gemäß Fig. 6 kann das erfindungsgemäße Verfahren auch in alternativer Form durchgeführt werden. Wiederum wird nach dem Start des Verfahrens bei 120 laufend überprüft, ob ein Netzfehler vorliegt und gegebenenfalls bei 140 der Stabilisierungsregler 25 aktiviert. Ein zuvor für die Spannungsregelung zuständiger P-Regler wird gleichzeitig deaktiviert. Wenn die tatsächliche Spannung unterhalb der Sollspannung liegt, erhält der Stabilisierungsregler 25 die entsprechende Differenz als Eingangsgröße. Die Ausgangsgröße wächst an, wenn die Differenz für eine Zeitspanne bestehen bleibt. Der Umrichter 21 setzt eine ansteigende Ausgangsgröße des Stabilisierungsreglers 25 durch einen ansteigenden Blindanteil um. Während die Ausgangsgröße des Stabilisierungsreglers 25 theoretisch sehr weit anwachsen kann, ist die Möglichkeit des Umrichters, den Blindanteil zu erhöhen, begrenzt. Im Ausführungsbeispiel ist die Grenze für den Blindanteil dadurch gesetzt, dass der Phasenwinkel ϕ zwischen Strom und Spannung nicht größer als 18° werden darf. Liegt die tatsächliche Spannung bei 80% der Sollspannung, so führt diese Differenz dazu, dass die Grenze von ϕ = 18° in weniger als einer Sekunde erreicht wird.

Stellt sich bei 160 heraus, dass es durch den erhöhten Blindanteil gelungen ist, die Spannung zu stabilisieren, wird der Stabilisierungsregler 25 bei 170 wieder deaktiviert, wobei sich der Vorgang des Deaktivierens über einen Zeitraum von 10 Sekunden erstreckt. Durch ein zeitlich gestrecktes Deaktivieren des Stabilisierungsreglers 25 wird das Risiko von Schwingungen im Stromverteilungsnetz 10 vermindert.

Reicht die erste Stufe nicht aus, um das Stromverteilungsnetz 10 zu stabilisieren, wird bei 200 die zweite Stufe des erfindungsgemäßen Verfahrens eingeleitet, indem die Grenze von ϕ = 18° aufgehoben wird. Dies führt dazu, dass die Einspeisung von Blindstrom Priorität vor der Einspeisung von Wirkstrom erhält. Der Umrichter 21 kann nun bei entsprechender Ausgangsgröße des Stabilisierungsreglers 25 bis auf ϕ = 90° gehen, so dass nur noch Blindstrom und kein Wirkstrom mehr eingespeist wird. Reduziert sich durch dies Maßnahme die eingespeiste Wirkleistung, so wird der Blattwinkel erhöht, wenn sich anders ein Anstieg der Generatordrehzahl nicht verhindern lässt. Ergibt die Überprüfung bei 210, dass die Stabilisierung der Spannung gelungen ist, wird die Windenergieanlage bei 170 über einen Zeitraum von 30 Sekunden wieder in den Normalbetrieb überführt. Gelingt es innerhalb von 5 Minuten nicht, die Spannung zu stabilisieren, wird die Windenergieanlage bei 215 wenn nötig außer Betrieb gesetzt.

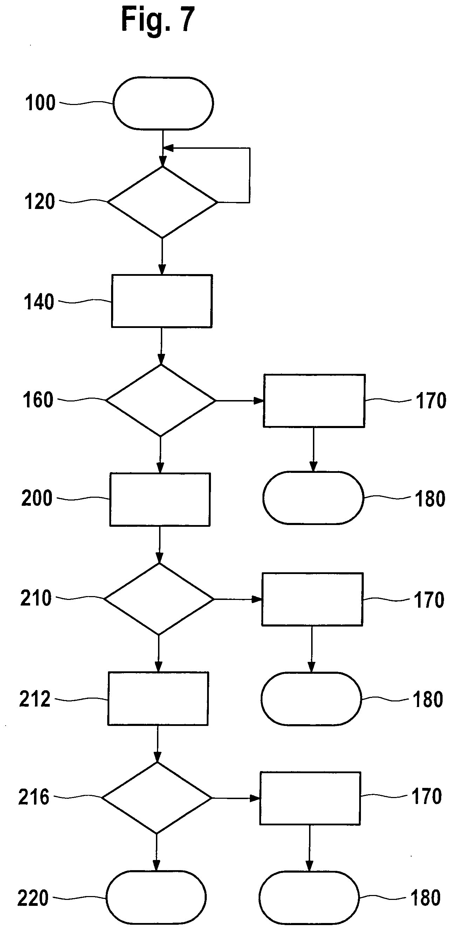

Bei dem in Fig. 7 gezeigten alternativen Ablauf umfasst das erfindungsgemäße Verfahren drei Stufen. Zunächst wird bei 140 der Stabilisierungsregler 25 aktiviert und bei 160 überprüft, ob diese Maßnahme innerhalb der vorgegebenen Zeit zum Erfolg führt. Ist dies nicht der Fall, wird bei 200 eine zweite Stufe des erfindungsgemäßen Verfahrens eingeleitet und der Sollwert für die Spannung erhöht. Führt auch dies innerhalb von 2 bis 10 Sekunden nicht zum Erfolg, wird der Sollwert innerhalb von 10 Sekunden in mehreren Stufen wieder auf den normalen Wert vermindert. Anschließend wird bei 212 die dritte Stufe des erfindungsgemäßen Verfahrens eingeleitet und die Grenze für den Phasenwinkel ϕ von 18° auf 70° erhöht. Bei einem Phasenwinkel von ϕ = 70° speist die Windenergieanlage 14 zum weit überwiegenden Anteil Blindstrom und nur noch zu einem geringen Anteil Wirkstrom ein. Nach Aufhebung der Grenze von ϕ = 18° wird der Phasenwinkel nicht auf einen Schlag, sondern kontinuierlich vergrößert, damit das Risiko von Schwingungen gering gehalten wird. Parallel zur Vergrößerung des Phasenwinkels ϕ wird der Anstellwinkel der Rotorblätter geändert, um zu verhindern, dass die Drehzahl des Rotors ansteigt. Bei dieser Ausführungsform wird also in drei Schritten abgestuft reagiert, um die Folgen eines Netzfehlers zu mindern.

## Patentansprüche

1. Verfahren zum Stabilisieren eines Stromverteilungsnetzes (10) nach der Klärung eines Netzfehlers, bei dem an das Stromverteilungsnetz (10) eine Stromerzeugungsanlage (14), insbesondere eine Windenergieanlage angeschlossen ist, die über einen Umrichter (21) elektrische Energie in das Stromverteilungsnetz (10) einspeist, mit den folgenden Schritten:
a. Entdecken des Netzfehlers des Stromverteilungsnetzes (10) ;
b. Aktivieren eines Stabilisierungsreglers (25) in der Stromerzeugungsanlage (14) nach dem Entdecken gemäß Schritt a., wobei eine Sprungantwort des Stabilisierungsreglers (25) mit der Zeit ansteigt und wobei der Stabilisierungsregler (25) die Spannung der eingespeisten elektrischen Energie in Abhängigkeit von einem rückgeführten Spannungssignal (26) regelt;
c. Überprüfen, ob sich die Spannung nach Ablauf einer vorgegebenen Zeitspanne seit dem Aktivieren des Stabilisierungsreglers (25) gemäß Schritt b. stabilisiert hat; und
d. Erhöhen der Blindstromeinspeisung über eine für den Normalbetrieb vorgesehene Grenze hinaus, falls die Überprüfung gemäß Schritt c. ergibt, dass die Spannung sich noch nicht stabilisiert hat.

2. Verfahren nach Anspruch 1, **dadurch gekennzeichnet, dass** in Schritt d. die Blindstromeinspeisung dadurch über die für den Normalbetrieb vorgesehene Grenze hinaus erhöht wird, dass der Sollwert für die Spannung erhöht wird.

3. Verfahren nach Anspruch 1, **dadurch gekennzeichnet, dass** in Schritt d. die Blindstromeinspeisung dadurch über die für den Normalbetrieb vorgesehene Grenze hinaus erhöht wird, dass der Einspeisung von Blindstrom gegenüber der Einspeisung Wirkstrom Priorität gegeben wird.

4. Verfahren nach Anspruch 3, **dadurch gekennzeichnet, dass** eine obere Grenze für den Phasenwinkel ϕ zwischen Strom und Spannung aufgehoben wird.

5. Verfahren nach Anspruch 3 oder 4, **dadurch gekennzeichnet, dass** die Stromerzeugungsanlage (14) eine Windenergieanlage mit einer Mehrzahl von Rotorblättern ist und dass parallel zu einer Verminderung der Wirkleistung der Anstellwinkel der Rotorblätter geändert wird.

6. Verfahren zum Stabilisieren eines Stromverteilungsnetzes (10) nach der Klärung eines Netzfehlers, bei dem an das Stromverteilungsnetz (10) eine Stromerzeugungsanlage (14), insbesondere eine Windenergieanlage angeschlossen ist, die über einen Umrichter (21) elektrische Energie in das Stromverteilungsnetz (10) einspeist, mit den folgenden Schritten:
a. Entdecken des Netzfehlers des Stromverteilungsnetzes (10) ;
b. Aktivieren eines Stabilisierungsreglers (25) in der Stromerzeugungsanlage (14) nach dem Entdecken gemäß Schritt a., wobei eine Sprungantwort des Stabilisierungsreglers (25) mit der Zeit ansteigt und wobei der Stabilisierungsregler (25) die Spannung der eingespeisten elektrischen Energie in Abhängigkeit von einem rückgeführten Spannungssignal (26) regelt;
c. Überprüfen, ob sich die Spannung nach Ablauf einer ersten vorgegebenen Zeitspanne seit dem Aktivieren des Stabilisierungsreglers (25) gemäß Schritt b. stabilisiert hat;
d. Erhöhen des Sollwerts für die Spannung, falls sich die Spannung in Schritt c. noch nicht stabilisiert hat;
e. Überprüfen, ob sich die Spannung nach Ablauf einer zweiten vorgegebenen Zeitspanne seit dem Erhöhen des Sollwerts stabilisiert hat;
f. Aufheben einer oberen Grenze für den Phasenwinkel ϕ zwischen Strom und Spannung, falls die Spannung in Schritt e. noch nicht stabilisiert ist.

7. Verfahren nach einem der Ansprüche 1 bis 6, **dadurch gekennzeichnet, dass** der Stabilisierungsregler (25) deaktiviert wird, wenn der Ist-Wert der Spannung eine vorgegebene Schwelle überschreitet.

8. Verfahren nach einem der Ansprüche 1 bis 7, **dadurch gekennzeichnet, dass** der Stabilisierungsregler (25) die Spannung auf der Hochspannungsseite als Führungsgröße verwendet.

9. Verfahren nach Anspruch 8, **dadurch gekennzeichnet, dass** der Stabilisierungsregler (25) die auf Hochspannungsseite vor Eintritt des Fehlers anliegende Spannung bzw. die entsprechende Untergrenze des Spannungsbands als Sollwert verwendet.

10. Stromerzeugungsanlage, die über einen Umrichter (21) elektrische Energie in ein Stromverteilungsnetz (10) einspeist, mit einer Steuereinheit (24), **dadurch gekennzeichnet, dass**:
a. ein Stabilisierungsregler (25) vorgesehen ist;
i. dessen Sprungantwort mit der Zeit ansteigt; und
ii. der dazu ausgelegt ist, die Spannung der eingespeisten elektrischen Energie in Abhängigkeit von einem rückgeführten Spannungssignal (26) zu regeln;
b. die Steuereinheit (24) folgende Merkmale aufweist:
i. ein Aktivierungsmodul, das den Stabilisierungsregler (25) nach einem Netzfehler aktiviert;
ii einen Detektor (23) zum Überprüfen, ob sich die Spannung nach Ablauf einer vorgegebenen Zeitspanne seit dem Aktivieren des Stabilisierungsreglers (25) stabilisiert hat; und
iii. ein Stellglied, um die Einspeisung von Blindstrom nach der Überprüfung durch den Detektor über eine für den Normalbetrieb vorgesehene Grenze hinaus zu erhöhen, falls die Spannung noch nicht ausreichend stabilisiert ist.

11. Stromerzeugungsanlage nach Anspruch 10, **dadurch gekennzeichnet, dass** der Stabilisierungsregler (25) ein I-Regler ist.

12. Stromerzeugungsanlage nach Anspruch 10, **dadurch gekennzeichnet, dass** der Stabilisierungsregler (25) ein P-Regler mit zeitabhängiger Verstärkung ist.

13. Stromerzeugungsanlage nach einem der Ansprüche 10 bis 12, **dadurch gekennzeichnet, dass** der Stabilisierungsregler (25) so ausgelegt ist, dass er ausschließlich spannungsanhebend wirkt.

14. Stromerzeugungsanlage nach einem der Ansprüche 10 bis 13, **dadurch gekennzeichnet, dass** sie dazu ausgelegt ist, das Verfahren nach einem der Ansprüche 2 bis 9 durchzuführen.

## Claims

1. Method for stabilizing an electricity distribution network (10) after the clarification of a network fault, wherein an electricity generating installation (14), in particular a wind energy installation, is connected to the electricity distribution network (10) and feeds electrical energy into the electricity distribution network (10) via a converter (21), comprising the following steps:
a. discovering the network fault of the electricity distribution network (10);
b. activating a stabilization controller (25) in the electricity generating installation (14) after the discovering in accordance with step a., wherein a step response of the stabilization controller (25) rises over time and wherein the stabilization controller (25) controls the voltage of the electrical energy fed in depending on a fed-back voltage signal (26);
c. checking whether the voltage has stabilized after a predefined time period has elapsed since activating the stabilization controller (25) in accordance with step b.; and
d. increasing the reactive current infeed beyond a limit provided for normal operation if the check in accordance with step c. reveals that the voltage has not yet stabilized.

2. Method according to Claim 1, **characterized in that** in step d. the reactive current infeed is increased beyond the limit provided for normal operation by virtue of the setpoint value for the voltage being increased.

3. Method according to Claim 1, **characterized in that** in step d. the reactive current infeed is increased beyond the limit provided for normal operation by virtue of the infeed of reactive current being given priority over the infeed of active current.

4. Method according to Claim 3, **characterized in that** an upper limit for the phase angle ϕ between current and voltage is cancelled.

5. Method according to Claim 3 or 4, **characterized in that** the electricity generating installation (14) is a wind energy installation having a plurality of rotor blades, and **in that** the angle of attack of the rotor blades is changed in parallel with a reduction of the active power.

6. Method for stabilizing an electricity distribution network (10) after the clarification of a network fault, wherein an electricity generating installation (14), in particular a wind energy installation, is connected to the electricity distribution network (10) and feeds electrical energy into the electricity distribution network (10) via a converter (21), comprising the following steps:
a. discovering the network fault of the electricity distribution network (10);
b. activating a stabilization controller (25) in the electricity generating installation (14) after the discovering in accordance with step a., wherein a step response of the stabilization controller (25) rises over time and wherein the stabilization controller (25) controls the voltage of the electrical energy fed in depending on a fed-back voltage signal (26);
c. checking whether the voltage has stabilized after a first predefined time period has elapsed since activating the stabilization controller (25) in accordance with step b.; and
d. increasing the setpoint value for the voltage if the voltage has not yet stabilized in step c.;
e. checking whether the voltage has stabilized after a second predefined time period has elapsed since increasing the setpoint value;
f. cancelling an upper limit for the phase angle ϕ between current and voltage if in step e. the voltage has not yet stabilized.

7. Method according to any of Claims 1 to 6, **characterized in that** the stabilization controller (25) is deactivated if the actual value of the voltage exceeds a predefined threshold.

8. Method according to any of Claims 1 to 7, **characterized in that** the stabilization controller (25) uses the voltage on the high-voltage side as a reference variable.

9. Method according to Claim 8, **characterized in that** the stabilization controller (25) uses the voltage present on the high-voltage side before the occurrence of the fault or the corresponding lower limit of the voltage band as a setpoint value.

10. Electricity generating installation which feeds electrical energy into an electricity distribution network (10) via a converter (21), comprising a control unit (24), **characterized in that**:
a. a stabilization controller (25) is provided;
i. the step response of which rises over time; and
ii. which is designed to control the voltage of the electrical energy fed in depending on a fed-back voltage signal (26);
b. the control unit (24) has the following features:
i. an activation module, which activates the stabilization controller (25) after a network fault;
ii. a detector (23) for checking whether the voltage has stabilized after a predefined time period has elapsed since activating the stabilization controller (25); and
iii. an actuator for increasing the infeed of reactive current beyond a limit provided for normal operation after the check by the detector if the voltage has not yet stabilized sufficiently.

11. Electricity generating installation according to Claim 10, **characterized in that** the stabilization controller (25) is an I controller.

12. Electricity generating installation according to Claim 10, **characterized in that** the stabilization controller (25) is a P controller having a time-dependent gain.

13. Electricity generating installation according to any of Claims 10 to 12, **characterized in that** the stabilization controller (25) is designed such that it has an exclusively voltage-raising effect.

14. Electricity generating installation according to any of Claims 10 to 13, **characterized in that** it is designed to carry out the method according to any of Claims 2 to 9.

## Revendications

1. Procédé pour stabiliser un réseau de distribution de courant (10) après la correction d'un défaut de réseau, dans lequel une installation de production de courant (14), en particulier une installation éolienne qui injecte de l'énergie électrique dans le réseau (10) par l'intermédiaire d'un convertisseur (21), est raccordée au réseau de distribution de courant (10), comprenant les étapes suivantes :
a. détecter le défaut de réseau sur le réseau de distribution de courant (10) ;
b. activer un régulateur de stabilisation (25) dans l'installation de production de courant (14) après la détection selon l'étape a., dans lequel une réponse par paliers du régulateur de stabilisation (25) augmente avec le temps et dans lequel le régulateur de stabilisation (25) régule la tension de l'énergie électrique injectée en fonction d'un signal de tension de retour (26) ;
c. vérifier si la tension s'est stabilisée après qu'une période de temps prédéterminée se soit écoulée depuis l'activation du régulateur de stabilisation (25) selon l'étape b.; et
d. augmenter l'injection de courant réactif au-dessus d'une limite prévue pour un fonctionnement normal si la vérification selon l'étape c. indique que la tension ne s'est pas encore stabilisée.

2. Procédé selon la revendication 1, **caractérisé en ce que**, lors de l'étape d., l'injection de courant réactif est augmentée au-dessus de la limite prévue pour un fonctionnement normal en faisant en sorte que la valeur de consigne de la tension soit augmentée.

3. Procédé selon la revendication 1, **caractérisé en ce que**, lors de l'étape d., l'injection de courant réactif est augmentée au-dessus de la limite prévue pour un fonctionnement normal en donnant la priorité à l'injection de courant réactif par rapport à l'injection de courant actif.

4. Procédé selon la revendication 3, **caractérisé en ce qu'**une limite supérieure de l'angle de phase ϕ entre le courant et la tension est supprimée.

5. Procédé selon la revendication 3 ou 4, **caractérisé en ce que** l'installation de production de courant (14) est une installation éolienne comportant plusieurs pales de rotor et **en ce que** l'angle d'attaque des pales du rotor est modifié parallèlement à une réduction de la puissance active.

6. Procédé pour stabiliser un réseau de distribution de courant (10) après la correction d'un défaut de réseau, dans lequel une installation de production de courant (14), en particulier une installation éolienne qui injecte de l'énergie électrique dans le réseau de distribution de courant (10) par l'intermédiaire d'un convertisseur (21), est raccordée au réseau de distribution de courant (10), comprend les étapes suivantes :
a. détecter le défaut de réseau sur le réseau de distribution de courant (10) ;
b. activer un régulateur de stabilisation (25) dans l'installation de production de courant (14) après la détection selon l'étape a., dans lequel une réponse par paliers du régulateur de stabilisation (25) augmente avec le temps et dans lequel le régulateur de stabilisation (25) régule la tension de l'énergie électrique injectée en fonction d'un signal de tension de retour (26) ;
c. vérifier si la tension s'est stabilisée après qu'une première période de temps prédéterminée se soit écoulée depuis l'activation du régulateur de stabilisation (25) selon l'étape b. ;
d. augmenter la valeur de consigne de la tension si la tension ne s'est pas encore stabilisée lors de l'étape c. ;
e. vérifier si la tension s'est stabilisée après qu'une deuxième période de temps prédéterminée se soit écoulée depuis l'augmentation de la valeur de consigne ;
f. supprimer une limite supérieure de l'angle de phase ϕ entre le courant et la tension si la tension ne s'est pas encore stabilisée lors de l'étape e.

7. Procédé selon l'une des revendications 1 à 6, **caractérisé en ce que** le régulateur de stabilisation (25) est désactivé lorsque la valeur réelle de la tension dépasse un seuil prédéterminé.

8. Procédé selon l'une des revendications 1 à 7, **caractérisé en ce que** le régulateur de stabilisation (25) utilise en tant que grandeur de référence la tension du côté à haute tension.

9. Procédé selon la revendication 8, **caractérisé en ce que** le régulateur de stabilisation (25) utilise en tant que valeur de consigne la tension présente du côté à haute tension avant l'apparition du défaut ou la limite inférieure correspondante de la bande de tension.

10. Installation de production de courant qui injecte de l'énergie électrique dans un réseau de distribution de courant (10) par l'intermédiaire d'un convertisseur (21), comprenant une unité de commande (24), **caractérisée en ce que** :
a. il est prévu un régulateur de stabilisation (25) ;
i. dont le palier de réponse augmente avec le temps ; et
ii. qui est conçu pour réguler la tension de l'énergie électrique injectée en fonction d'un signal de tension de retour (26) ;
b. l'unité de commande (24) présente les éléments caractéristiques suivantes :
i. un module d'activation qui active le régulateur de stabilisation (25) après un défaut de réseau ;
ii. un détecteur (23) destiné à vérifier si la tension s'est stabilisée après qu'une période de temps prédéterminée se soit écoulée depuis l'activation du régulateur de stabilisation (25) ; et
iii. un organe de réglage destiné, après la vérification effectuée par le détecteur, à augmenter l'injection de courant réactif au-dessus d'une limite prévue pour le fonctionnement normal si la tension ne s'est pas encore suffisamment stabilisée.

11. Installation de production de courant selon la revendication 10, **caractérisée en ce que** le régulateur de stabilisation (25) est un régulateur I.

12. Installation de production de courant selon la revendication 10, **caractérisée en ce que** le régulateur de stabilisation (25) est un régulateur P à amplification dépendant du temps.

13. Installation de production de courant selon l'une des revendications 10 à 12, **caractérisée en ce que** le régulateur de stabilisation (25) est conçu de manière à avoir un exclusivement effet d'augmentation de tension.

14. Installation de production de courant selon l'une des revendications 10 à 13, **caractérisée en ce qu'**elle est conçue pour mettre en œuvre le procédé selon l'une des revendications 2 à 9.
